# EUROPEAN PATENT APPLICATION

(11) **EP 4 353 538 A1**
(43) Date of publication of application: **17.04.2024**
(21) Application number: 22200564.7
(22) Date of filing: 10.10.2022
(51) Int. Cl.: B60R 1/00

(54) **A CONTROL SYSTEM FOR A VEHICLE AND METHOD OF IMPLEMENTING SAME**

(71) Applicant: Aptiv Technologies Limited, St. Michael (BB)
(72) Inventor: Yousef, Sebastian, DUBLIN (IE); Rosenthal, Thorsten, DUBLIN (IE)
(74) Representative: Lewis Silkin LLP

(57) **Abstract**

A control system associated with a digital mirror system (10) for a vehicle (V) comprises cameras (5a, 5b, 5c) located at positions emulating rearward/sidewards facing mirrors, a dedicated mirror microprocessor unit (MPU 3b, 9) for processing captured video from the cameras, and at least one internal display for viewing the streamed video. The mirror MPU is configured to transition from a low power standby mode to a high power operating mode upon receiving a wake signal, e.g. activated by a door handle, keyless entry etc. By use of a dedicated mirror system processor any delay in the display becoming operational is minimised, thereby increasing safety of the vehicle.

## Description

### Introduction

The present disclosure relates to a control system for a vehicle, particularly for controlling a safety function such as a digital mirror and a method and/or software for operating the same.

### Background

In road vehicles, rear-view and side mirrors are vital for safe driving, ensuring a driver has an adequate view of any other vehicles or vulnerable road users (VRUs) behind or closely adjacent their vehicle. However, there are a number of known issues with traditional external side mirrors, e.g. due to size and shape, such as high aerodynamic drag which can often result in increased wind noise level and reduced energy efficiency, and susceptibility to glare in low light conditions, due to only reflecting ambient light. In some cases, especially large side mirrors may restrict some forward visibility of the driver.

Rear-view mirrors, while inside the vehicle and so having no effect on driving aerodynamics/efficiency, may obscure part of the forward view through the windshield. Indeed, the reflected image in a rear view mirror itself is often obscured by occupants or other contents in the vehicle. Glare is also a problem for rear-view mirrors in low light, e.g. when high beam lights may be shining from behind. This is mitigated by anti-glare mechanisms, but such devices reduce visibility.

To address the above issues, solutions have been proposed that employ digital mirror systems (i.e. "e-mirrors") which replace the conventional side mirrors with compact, rear-facing high-resolution cameras. These cameras are mounted at least partially on the exterior of the vehicle, e.g. at the position of traditional wing/side mirrors, toward a rear facing position, and linked to an integrated internal display, the image of which is generally reversed to be a familiar "mirror image". A directly rear facing camera may be provided to emulate an internal rear view mirror. Cameras may also be arranged in front facing positions, without reversal of the display. Accordingly, the field of view afforded to the driver is extended, both by improving outward visibility/minimizing blind spots, whilst also lessening air resistance, therefore leading to reduced fuel consumption and CO₂ emissions and/or battery usage.

However, such digital mirrors are configured as part of the vehicle's main electronic control system which often has a large standby current and can be slow to react from standby. Current solutions may involve door modules or additional electronic control unit, ECU, boxes. For the digital mirror this means that there is an unacceptable delay before it is operational for use. There may also be high glass-to-glass latency in the digital mirror in known systems, i.e. the delay from image capture by a camera lens to display on a screen. High latency can make the driving experience unnatural and present associated safety challenges, compared to a conventional mirror where a mirror image of what is behind/beside the vehicle is "displayed" practically instantaneously.

Accordingly, there is a need to address the above shortcomings associated with conventional digital mirror systems. Indeed, the above considerations are applicable to a vehicle's electronic control system more generally, where different functions may need to be activated or available for operational use at different times or according to different priorities.

### Summary

According to a first aspect, a control system for a vehicle is provided as outlined by claim 1 of the appended claims. The control system has a plurality of MPUs that each manage one or more electronic functions of the vehicle. The control system is configured to activate (e.g. wake up_ from sleep mode) and/or deactivate (e.g. return to sleep mode) at least one MPU of the plurality of MPUs to/from an operational state according to a determined priority. By this system, the at least one MPU may be available for operational use before other MPUs of the plurality of MPUs. The at least one MPU, e.g. an MPU dedicated to a particular function, may be the first one to be activated and last to standby. Generally, each MPU may be responsible for control of an electronic subsystem of the vehicle such as a safety function, entertainment, navigation etc.. Priority may be determined for example according to whether the at least one MPU/subsystem relates to a safety function and/or power consumption requirements.

The control system may incorporate digital mirror functionality for a vehicle. In the case of a digital mirror, the system comprises at least one camera for capturing video data of an area outside the vehicle; a dedicated mirror microprocessor unit, MPU, for processing the captured video data (e.g. serving as a camera microprocessor unit independent of the vehicle's central/main MPU); and at least one internal display for streaming the processed video data, wherein the MPU is configured to switch from a low power standby mode to a high power operating mode upon receiving a wake signal. In this context, the mirror MPU is available to operate (including to act as an object detection device) more quickly than a central MPU of the vehicle. As the mirror MPU may be "first to wake" of the vehicle's functional systems, so it may be "last to sleep". In general, the software overhead for a dedicated MPU is much smaller than a main vehicle CPU that performs many functions.

A second aspect provides for a vehicle incorporating a central processing unit (CPU) for operating electronic functions of the vehicle, and a vehicle control system, e.g. incorporating a digital mirror system, according to the first aspect. The invention is useful because a safety function such as a digital mirror requires a rapid wake up time compared to other functions. However, keyless entry and keyless go systems also need low wake up times, low standby current and high availability. Therefore, such examples of functionality should be within the scope of the invention, the primary example of which is an eMirror. The vehicle control system provides a means of prioritising MPU activation for available operation, where the system has a plurality of MPUs.

In this way, the control system may incorporate one or more MPUs dedicated to serving discrete functions, e.g. the digital mirror system. In the case of a mirror, the system is capable of receiving video data, processing this video data, and outputting the processed video data over a display port or display serial interface for visualization by the vehicle user. The digital mirror MPU of the system functions in parallel to a separate central MPU, i.e. the Central Compute Platform's system-on-a-chip "SoC". However, the CPU does not necessarily exclude a capability to control digital cameras/displays or other quick to boot functions as a back up in the event of failure thereof.

By selecting a lightweight and cost-efficient processor, e.g. for the digital mirror MPU, quick boot-up times from a low current standby state can be achieved, thereby minimising the amount of time it takes for initiation of the first frame of video to transfer from the camera to the display. In this way, the system is operational immediately upon entry into the vehicle which improves overall safety for occupants and those external to the vehicle. The configuration also may result in minimising system sleep current.

In a particular embodiment the at least one camera comprises at least one directly rearward camera and two external rearward facing wing cameras. The directly rearward camera may be positioned central and internal to the vehicle, e.g. at a back window, while the external cameras are positioned forward of the driver at each wing of the vehicle. In this way, the two external cameras may perform the function of capturing video data representative of what would normally be reflected in traditional side mirrors, and the other camera may capture video data representative of what would normally be reflected in the rear view mirror, i.e. directly behind the vehicle.

In one form the at least one internal display comprises at least one display located proximate a wing side wall of the vehicle, forward of the driver, i.e. an equivalent position emulating a wing mirror. In this way, the driver of the vehicle may obtain visual information about their surroundings by observing an area substantially in the same way as conventional rear mirrors.

In one form the wake signal may be generated by operation of an entry function, e.g. a door handle of the vehicle or equivalent unlocking. In this way, the digital mirror MPU may boot up/power down upon entry or exit of the vehicle by a driver or passenger.

The wake signal may be alternatively or additionally initiated by recognition of an occupant within the vehicle. In this way, the digital mirror MPU may boot up upon recognising the presence of a driver or passenger. In some forms, such recognition may be achieved via a pressure sensor within a seat of the vehicle.

As mentioned, the wake signal may be triggered by a locking system of the vehicle changing status. In this way, the digital mirror MPU may boot up/powered down upon the vehicle being either locked or unlocked.

Alternatively or additionally the wake signal may be one of an ultrawideband "UWB" signal, phone-as-a-key "PaaK" signal or passive entry passive start "PEPS" signal. In this way, the digital mirror MPU may boot up from a keyless entry operation, e.g. directly from a transmitter carried by a user.

In one form the MPU may be capable of running machine-learning based image processing algorithms. In this way, the digital mirror MPU may learn to identify the presence of VRUs in its field of view.

According to a third aspect there is provided a method of operating digital mirrors of a vehicle, e.g. that includes at least one internal display and at least one camera, comprising the steps of: receiving a wake signal, e.g. at a power data centre, PDC, of the vehicle; relaying the wake signal to a dedicated mirror microprocessor unit, MPU (e.g. a digital mirror MPU independent of other MPU(s) used for control functions of the vehicle); switching the MPU from a low-power mode to a high-power mode; capturing video data by the at least one camera; processing the video data by the dedicated mirror MPU; and streaming the processed video data to the at least one internal display. In this way, it is possible to rapidly wake a digital mirror for use where the video data is displayed to the vehicle user as soon as possible, thereby reducing delay.

In one form, the method further includes the step of issuing a warning upon detection of a hazard in the video data. In this way, the vehicle user is informed of any approaching vehicles or VRUs. In addition to the warning, an automated decision may be executed to lock the doors and prevent exit of occupants, e.g. in a situation where a cyclist rapidly approaches from the rear at a side of the vehicle.

The wake signal of the method may be initiated by an entry function, e.g. operating a door handle of the vehicle or unlocking the vehicle by a handheld fob. In this way, opening a door from either the inside or outside of the vehicle, and/or unlocking the vehicle may trigger the MPU to switch from a low-power mode to a high-power mode such that it can process video data for display. The switch from standby will be more rapid for the mirror MPU than switching to operational readiness of the general MPU used for other electronic functions of the vehicle.

The method may further include a step of switching the mirror MPU from a high-power mode to a low-power mode, i.e. from operational to standby. In such embodiments the switching may occur upon locking the vehicle. In this way, the digital mirror MPU can be ramped down quickly to save energy once the vehicle is no longer in operation.

According to a fourth aspect, there is provided a non-transitory computer readable medium including instructions, which when executed by one or more processors, implement the foregoing method. According to a further aspect, there is provided a computer software product including instructions which, when executed by one or more processors, implement the above method.

### Brief Description of Drawings

Illustrative embodiments will now be described with reference to the accompanying drawings in which:
Figure 1 illustrates a schematic diagram of a digital mirror system, within a Central Compute Platform (CPP) of a vehicle;
Figure 2 illustrates a block diagram of the CPP of the digital mirror system of Figure 1;
Figure 3 illustrates a block diagram of a plug-in board of a Central Vehicle Controller;
Figure 4 illustrates a block diagram of a base-board of the Central Vehicle Controller; and
Figure 5 illustrates a flow diagram illustrating an implementation of the digital mirror system according to an embodiment.

### Detailed Description

The following description presents exemplary embodiments and, together with the drawings, serves to explain principles of the invention. However, the scope of the invention is not intended to be limited to the precise details of the embodiments or exact adherence with all features and/or method steps, since variations will be apparent to a skilled person and are deemed also to be covered by the description. Terms for components used herein should be given a broad interpretation that also encompasses equivalent functions and features. In some cases, several alternative terms (synonyms) for structural features have been provided but such terms are not intended to be exhaustive. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "sideways", "upper" and "lower" are used for convenience of explanation usually with reference to the form shown in illustrations and are not intended to be ultimately limiting if an equivalent function can be achieved with an alternative dimension and/or direction. All directional terms are relative to each other.

The description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

It will be understood that the illustrated embodiments show applications only for the purposes of explanation. In practice, the invention may be applied to many different configurations, where the embodiment is straightforward for those skilled in the art to implement.

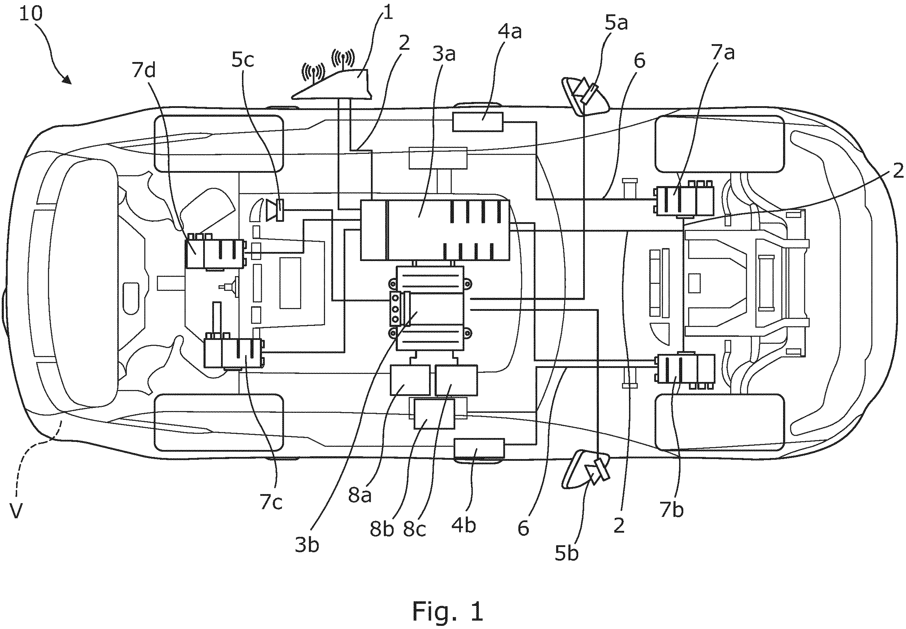

Referring to Figure 1, a schematic view of a digital mirror system 10 is shown, as provided within a vehicle V. The system 10 includes an ultrawide-band "UWB" receiver 1, connected via a CAN-FD (Controller Area Network Flexible Data-Rate) communication protocol 2 to a Central Compute Platform, CPP, which includes a central vehicle controller 3a and a dedicated mirror MPU 3b. The UWB receiver 1 is capable of receiving signals from keyless entry systems, such as Phone-as-a-key "PaaK" and/or passive-entry-passive-start "PEPS".

The digital mirror system 10 further includes a plurality of rear-facing cameras 5a, 5b, 5c, in direct communication with the mirror MPU. Cameras 5a and 5b are external cameras, housed in compact units in a location proximate to the position normally occupied by conventional rear facing wing mirrors. Camera 5c is a rear-facing camera, e.g. mounted within the vehicle (although it could extend through the body of the vehicle like cameras 5a and 5b or be mounted externally).

The cameras 5a-5c are configured to capture video data of the area in the respective field of views, e.g. directly behind and to the sides of the vehicle. A further camera may provide a forward view.

Door handles 4a and 4b of the vehicle are connected via cables 6, e.g. to power data centres, PDCs 7a and 7b. The PDCs 7a and 7b are also connected to the Central Compute Platform via a CAN-FD data communication protocol 2. In a particular form, a signal from the PDCs or entry sensor may be routed directly to the mirror MPU 3b.

The system may include additional PDCs 7c and 7d, located within the vehicle, e.g. at the rear. A plurality of displays 8a 8b and 8c are provided within the vehicle, and connected to the mirror MPU 3b, to display the video data captured by respective cameras 5a, 5b and 5c. In a particular form at least one (or preferably two) of the displays may be located at sides, e.g. of a console, forward of the driver (proximate where a conventional wing mirror may be viewed by a driver) and/or in a central console of the vehicle.

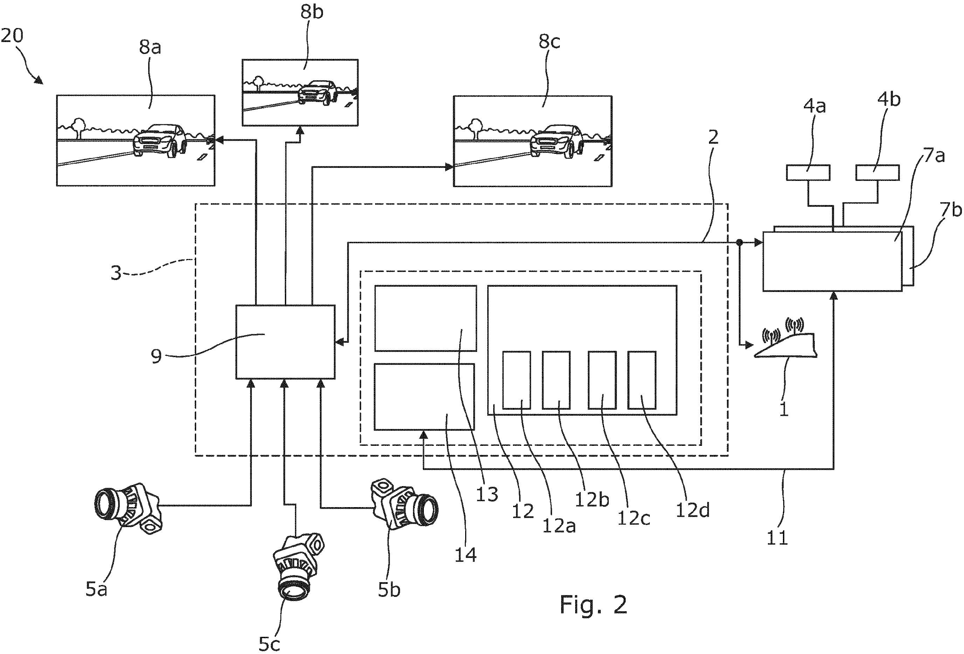

Figure 2 shows the electrical architecture 20 of a digital mirror system 10 in greater detail. In particular, the CPP 3 includes an MPU 9, solely dedicated to the digital mirror functionality (herein "mirror MPU"). When not in use, the MPU 9 operates in a low power "standby" mode. The MPU 9 is in electrical communication with cameras 5a, 5b and 5c and corresponding displays 8a, 8b and 8c. In addition, the MPU 9 is configured to receive a wake signal from any of the PDCs 7a, 7b, e.g. that may be coupled to doorhandles 4a/4b, or the UWB receiver 1. The wake signal is preferably transmitted via the CAN-FD data communication protocol 2 or equivalent.

The CPP 3 also includes a central vehicle performance processor 12 that includes separate functionalities for respectively handling, e.g. advanced driver assistance systems 12a, user experience 12b, data management 12c and gross train weight 12d. As such, these necessary functions of the vehicle are carried out by the performance processor 12, thereby allowing the MPU 9 to dedicate all of its processing power to the digital mirror system 10.

The CPP 3 may also include a safety controller 13 for ensuring the safe operation of all processes, and an ethernet switch 14 for supporting the high-bandwidth communications required for routing data from vehicular sensors. Accordingly, the ethernet switch 14 is further connected to the PDCs 7a and 7b (and 7c/7d).

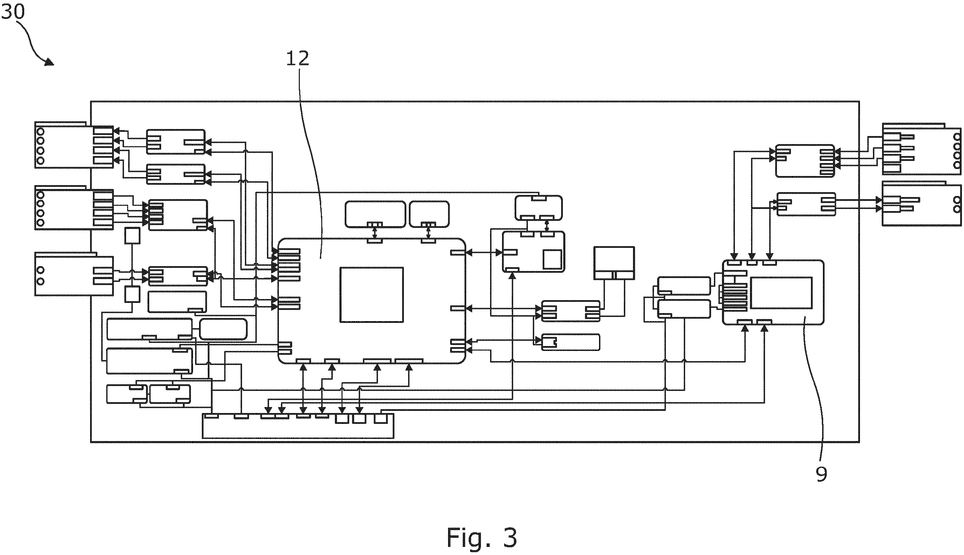

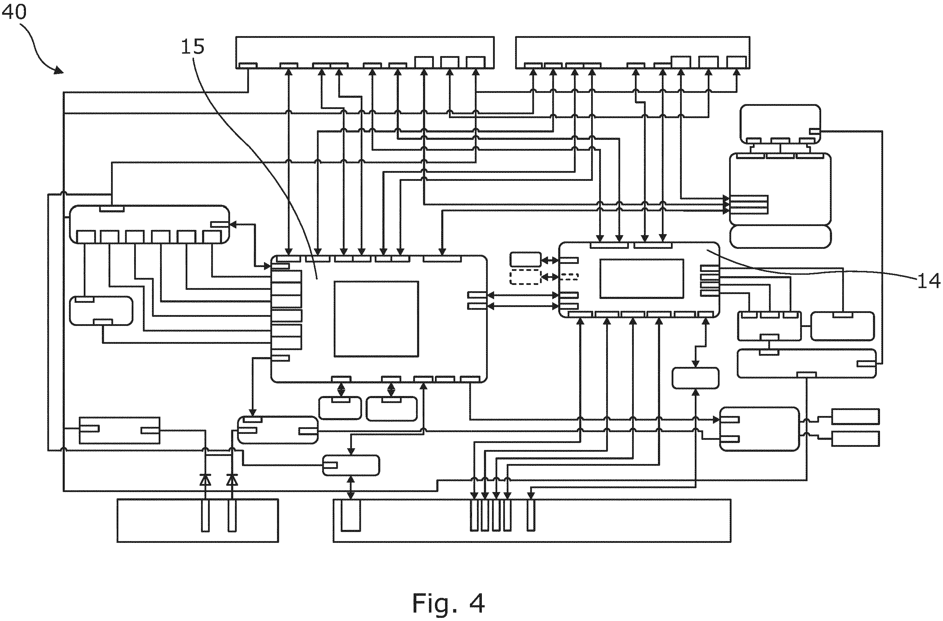

Figures 3 and 4 show detailed block diagrams of a plug-in board 30 and base-board 40 of the CPP. In particular, Figure 3 illustrates connections between the digital mirror MPU 9 and the main MPU 12. The plug-in design approach is chosen to allow increased scalability and flexibility. Figure 4 illustrates the base-board 40 onto which the MPU plug-in board 30 of Figure 3 is plugged. Amongst the components that are illustrated are the ethernet switch 14 and the gateway System-on-a-chip "SoC" 15.

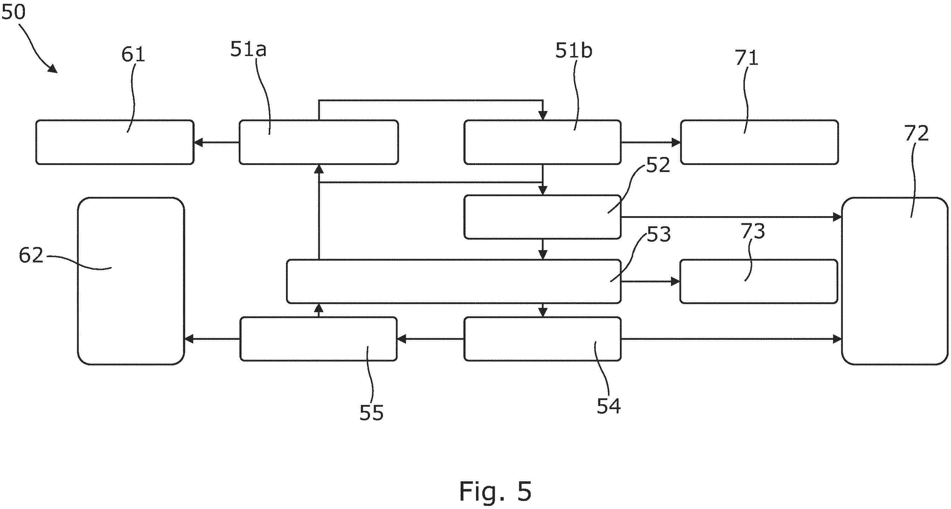

The operation of the digital mirror system 10 will now be described with reference to Figure 5, which is a flow diagram 50 illustrating an implementation of the system.

By way of example, when the vehicle status is inactive, a user may unlock the vehicle (i.e. at block 51b of Figure 5) thereby sending a wake signal. Upon unlocking the vehicle, the digital mirror MPU is woken up from its standby low-power mode and ramps up to a high-power mode (71) over a CAN-FD network. Such ramping is achieved quickly over the CAN-FD network in order to reach high-power mode before any other MPU in the vehicle system. In particular, as mentioned, PDCs may receive the wake signal, for example a UWB or PEPS signal. The PDCs then relay this wake signal to the MPU 9.

Similarly, when door handle sensors are activated (block 52) by opening the doors of the vehicle, a wake signal may be sent to the digital mirror MPU 9 over the CAN-FD network 2, resulting in the MPU 9 quickly ramping up to high-power mode. In this way, video data is captured by the cameras, processed by the MPU 9, and streamed to show content on displays (block 72) such that a live stream of the immediate surroundings of the vehicle is displayed and available to the user.

If the system is configured to identify events/hazards from the images captured by one or more of the cameras, i.e. to detect VRUs in the rear and/or lateral vicinity of the vehicle (53), a warning (73) is issued to the vehicle occupants via display or as an audible/tactile alert. In one form vehicle doors may be temporarily locked to protect both occupants and/or a VRU. The presence of hazards (approaching cars, VRUs) may be highlighted on the internal displays. Upon starting the vehicle engine (block 54), the captured video data continues to be processed and streamed to the displays.

When the vehicle engine is stopped (block 55), the cameras continue (or are once again activated) to detect if there are VRUs in the rear and/or lateral vicinity of the vehicle (53). At the same time, the video data is streamed to the displays (62). If approaching hazards are detected, a warning may be issued to the vehicle occupants and/or to implement automated locking.

When no longer in use, and following occupant exit, the vehicle may be locked (block 51a) by the user, which causes the digital mirror MPU to ramp down to the standby low-power mode (block 61). In some forms, vehicle locking may be achieved by a keyless entry signal (or drop out of signal where a key fob moves out of range).

According to the foregoing an improved digital mirror system for a vehicle is provided, which advantageously has its own dedicated MPU to achieve fast booting up, thereby reducing the delay to reach operational usefulness and improving safety for users and the wider public. Particularly, the dedicated mirror MPU boots up from a low-power mode to a high-power mode, upon receiving a wake signal from one or more of a number of sources, more quickly than a general MPU that controls multiple functions.

In general, the invention can be summarised as an improvement in vehicle control systems with particular application to e-mirror technology on a central compute platform, such as for a smart vehicle architecture (SVA), e.g. with mitigation for one or more of three challenges, namely: (a) realising a fast system reaction time; (b) minimizing system sleep current; and (c) minimising the number of ECU boxes in the vehicle for specific functions. The description herein highlights a specific system and electrical configuration to achieve these three mentioned problems. The disclosure outlines implementation of a technical solution located on a central compute platform (CPP) but it is also feasible to integrate it into a zonal controller (PDC).

Broadly, the digital mirror system of the vehicle comprises cameras located at positions emulating rearward/sidewards facing mirrors. It further utilises a dedicated mirror microprocessor unit for processing captured video from the cameras, and at least one internal display for viewing streamed video. The mirror MPU is configured to transition from a low power standby mode to a high power operating mode upon receiving a wake signal, e.g. activated by a door handle, keyless entry etc. By use of a dedicated mirror system processor any delay in the display becoming operational is minimised, thereby increasing safety of the vehicle.

To wake up the system and start the e-Mirror cameras and displays, it is important to react to sensor inputs as quickly as possible. As mentioned, these sensor inputs may be the locking system (UWB, PaaK, PEPS), door handles, and recognition of occupants in the vehicle itself which could be determined by digital signals like seat pressure sensors. The abovementioned sensing of door handles, locking systems and passengers may be provided by telematic antenna and zonal controllers (PDCs). Such components preferably report their status over CAN-FD and are also able to wake up the CCP very quickly by using CAN-FD.

Activation of one of the mentioned reporting systems may be provided by CAN-FD (or generally, e.g. digital input lines, Ethernet with TC-10, etc) to the e-Mirror microprocessor. This MPU manages the functionality of cameras and displays for the e-Mirror system only and has the advantage of low standby current and fast boot up time, compared to a higher powered processor responsible for multiple roles, including an e-mirror function. The dedicated mirror MPU processes camera signals and initializes displays to show content of external video streams. The MPU may have the capability to run machine learning based vision algorithms to detect objects and highlight recognized objects on the screens or set up specific warning signals (e.g. visual, audible, tactile). This could be used for active safety functions like recognizing cyclists approaching from the rear/side and locking the doors to prevent occupants opening doors and causing collisions.

It should be noted that, in a SoC, smaller processing modules within the system may be arranged to be activated first for the performance of a particular vehicle service (e.g. e-Mirror, keyless entry and/or keyless ignition). An MPU could be selected from, for example, smaller available processor types, e.g. for an e-Mirror that brings safety cores with ASIL-B qualification, performance processor cores and DSPs capable of vision processing such as object detection, object classification and semantic segmentation. It is noteworthy that the MPU examples may be substituted for devices of similar or improved performance, so long as during the wake-up procedure, e.g. over CAN-FD, the MPU may be the first out of standby mode and boots up for display visualizations very quickly. This procedure is important for both entering and leaving the vehicle by a driver and passengers.

It will be understood that the embodiments illustrated and described herein show applications only for the purposes of explanation. In practice, embodiments may be applied to many different configurations, the details of which being straightforward for those skilled in the art to implement.

For example, whilst the embodiments are implemented on a central compute platform context, other embodiments may be implemented in a decentralised architecture. For example, a plurality of zonal controllers may be envisioned. The concept of a quickly available mirror system, compared to a system of shared processing power remains regardless of whether other electronic functions are also decentralised.

## Claims

1. A control system, for use in a vehicle having a plurality of MPUs that each manage one or more electronic functions of the vehicle;
the control system being configured to activate and/or deactivate at least one MPU of the plurality of MPUs to/from an operational state according to a determined priority.

2. The control system of claim 1, wherein the at least one MPU comprises a dedicated MPU configured for control of a vehicle safety function.

3. The control system of claim 2, wherein the vehicle safety function is a digital mirror subsystem for object detection.

4. The control system of claim 3, wherein the digital mirror subsystem comprises:
at least one camera (5a, 5b, 5c) for capturing video data of an area outside the vehicle; and
at least one internal display (8a, 8b, 8c) for displaying video data;
wherein the dedicated MPU comprises a dedicated camera MPU (3b, 9) configured for receiving/processing the captured video data, streaming video data to the at least one internal display, and transitioning from a low power standby mode to a higher power operating mode upon receiving a wake signal, the transition being more rapid than other MPUs of the plurality of MPUs configured for controlling other electronic functions.

5. The control system of any preceding claim, wherein the at least one MPU comprises a dedicated MPU configured for keyless entry and/or keyless ignition.

6. The control system according to any preceding claim, wherein activation of the at least one MPU is in response to a wake signal.

7. The control system according to any preceding claim, wherein the wake signal is at least one of an ultrawideband, UWB, signal, phone-as-a-key, PaaK, signal or passive entry passive start, PEPS, signal.

8. The control system according to claim 4, wherein the dedicated camera MPU is configured for detecting hazards and/or events from the captured video data and, upon detection of a hazard and/or event, activating an alert and/or command to activate a door locking system.

9. The vehicle control system according to any preceding claim, wherein the at least one MPU comprises at least two dedicated MPUs, the system being configured to prioritise relative activation and/or deactivation of the at least two dedicated MPUs, for determining a first to wake and/or last to sleep function.

10. A method of controlling electronic functions in a vehicle, comprising:
configuring a plurality of MPUs to each operate one or more electronic functions in the vehicle;
configuring at least one dedicated MPU of the plurality of MPUs to, in response to a wake signal, transition to an operational state according to a determined priority.

11. The method of controlling electronic functions in a vehicle according to claim 10, further adapted for digitally emulating a mirror in a vehicle that includes at least one internal display and at least one camera, comprising the steps of:
receiving the wake signal at the at least one dedicated MPU;
transitioning the at least one dedicated MPU from a low-power mode to a higher-power mode;
capturing video data by the at least one camera;
receiving and processing the video data at the at least one dedicated MPU, including for detecting a hazard and, upon detection of same, generating an alert and/or activation of a locking system; and
streaming the processed video data to the at least one internal display.

12. The method according to any of claims 10 or 11, wherein the wake signal is initiated by one or more of the following events: operation of a door handle of the vehicle, activation of a locking or unlocking function of the vehicle, detection of an occupant within the vehicle.

13. A non-transitory computer readable medium comprising instructions which, when executed by a vehicle control system, implement the method of any one of claims 10 to 12.

14. A digital mirror system (10) for use in a vehicle (V) having a plurality of MPUs each configured for controlling one or more electronic functions, the mirror system comprising:
at least one camera (5a, 5b, 5c) for capturing video data of an area outside the vehicle;
a dedicated camera MPU (3b, 9), being one of the plurality of MPUs, for processing the captured video data to detect a hazard and/or events; and
at least one internal display (8a, 8b, 8c) for streaming the processed video data;
wherein the dedicated camera MPU is configured to transition from a low power standby mode to a higher power operating mode upon receiving a wake signal, the transition to the operating mode being more rapid than other MPUs of the plurality of MPUs.

15. A vehicle comprising the control system of any of claims 1 to 9, or the digital mirror system of claim 14.
